# EUROPÄISCHE PATENTSCHRIFT

(11) **EP 0 778 187 B1**
(45) Veröffentlichungstag und Bekanntmachung des Hinweises auf die Patenterteilung: **02.06.1999**
(21) Anmeldenummer: 96116554.5
(22) Anmeldetag: 16.10.1996
(51) Int. Cl.: B60T 5/00, B60R 11/00

(54) **Luftleitvorrichtung**
Spoiler arrangement
Chicane pour l'air

(30) Priorität: 09.12.1995 DE 19546064
(43) Veröffentlichungstag der Anmeldung: 11.06.1997
(73) Patentinhaber: Dr.Ing.h.c. F. Porsche Aktiengesellschaft, 70435 Stuttgart (DE)
(72) Erfinder: Toman, Vilem, 75446 Wiernsheim (DE)

(56) Entgegenhaltungen:
- EP-A- 0 276 640
- EP-A- 0 331 888
- DE-A- 4 214 912
- US-A- 4 591 285

## Beschreibung

Die Erfindung bezieht sich auf eine Luftleitvorrichtung nach dem Oberbegriff des Anspruchs 1.

Aus der EP 0 331 888 A1 ist eine Luftleitvorrichtung bekannt, die an einem Radlenker mittels einer Befestigungsvorrichtung gehalten ist. Diese Vorrichtung umfaßt Schraubmittel, welche mit dem Radlenker verbunden werden.

Aufgabe der Erfindung ist es, eine Luftleitvorrichtung zu schaffen, die in einfacher Montageweise an einem Achsbauteil bzw. an einem Radlenker befestigbar ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß das Luftleitelement ohne irgendwelche Schraubmittel am Radlenker über eine angeformte Einhakverbindung lösbar zu befestigen ist.

Das Luftleitelement besteht im wesentlichen aus einem Kunststoffteil an dem die Einhakverbindungen mit angeformt sind. Es kann eine Einhakverbindung oder es können auch mehrere Einhakverbindungen verwendet werden, was von der Länge des Luftleitelements abhängt.

Die Einhakverbindung umfaßt den Radlenker umgreifende Haltelaschen, wobei die eine Haltelasche mit einer Schließzunge verbunden ist, die in eine Öffnung der weiteren Haltelasche einhakbar ist und somit das Luftleitelement am Radlenker befestigbar ist.

Zum Verbinden des Luftleitelements mit dem Radlenker wird das flexible bzw. elastisch ausgebildete Luftleitelement in Längsrichtung soweit aufgebogen, daß die Haltelaschen ein Einführen des Radlenkers erlauben, damit dieser in eine längsverlaufende Öffnung hineinlegbar ist. Über endseitige Abschnitte des Luftleitelementes erfolgt dann eine Abstützung bzw. Anlage des Radlenkers.

Die Haltelaschen sind so ausgebildet, daß sie den in die Öffnung eingesetzten Radlenker fest umgreifen und eine Sicherung über eine Schließzunge erfolgt, welche in einer der Haltelaschen arretierbar ist. Das Luftleitelement ist somit unverrückbar mit dem Radlenker verbunden. Durch Entriegeln der Haltelaschen über die Schließzunge ist das Luftleitelement auch wieder vom Radlenker entfernbar, damit in einfacher Weise ein Austausch, z.B. bei defektem Luftleitelement stattfinden kann.

Das Luftleitelement ist vorzugsweise auf dem Radlenker in der Weise angeordnet, daß ein Abschnitt des Elements im Bereich der Längsöffnung eine Rippe des Radlenkers bzw. ein Stützteil bzw. eine Stützplatte in eine Aufnahme des Radlenkers eingreift. Dies dient zur Fixierung des Luftleitelementes am Radlenker in Axialrichtung.

Die Haltelaschen umgreifen mit einem winkelförmig abgebogenen Ende eine Seite des Radlenkers. Wenn der Radlenker eine Rippe aufweist, wird diese übergriffen, wobei die Schließzunge dann von innen her in eine der Haltelaschen verhakt wird.

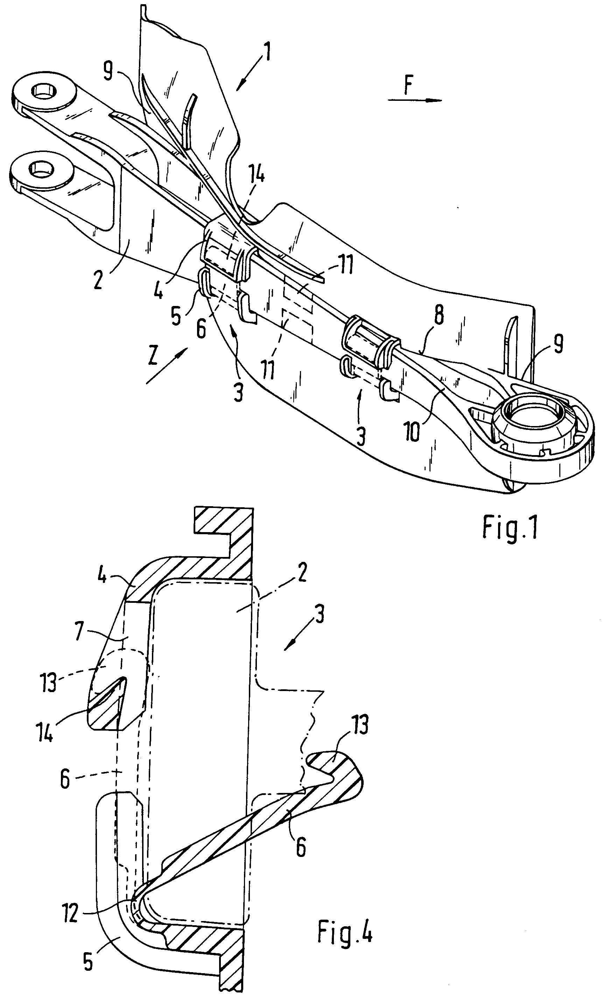

Ein Ausführungsbeispiel der Erfindung ist in der Zeichnung dargestellt und wird im folgenden näher beschrieben. Es zeigen
- Fig. 1: eine schaubildliche Darstellung des Luftleitelements mit Radlenker,
- Fig. 2: eine Ansicht in Pfeilrichtung Z auf das Luftleitelement mit Radlenker gesehen,
- Fig. 3: eine Ansicht in Pfeilrichtung X gemäß Fig. 2 und
- Fig. 4: einen Schnitt nach der Linie I-I der Fig. 2.

Eine Luftleitvorrichtung 1 ist an einem Achsbauteil, wie beispielsweise einem Schwenklager oder Radlenker 2 mittels einer oder mehrerer Einhakverbindungen 3 befestigt, die am Luftleitelement 1 mit angeformt sein können.

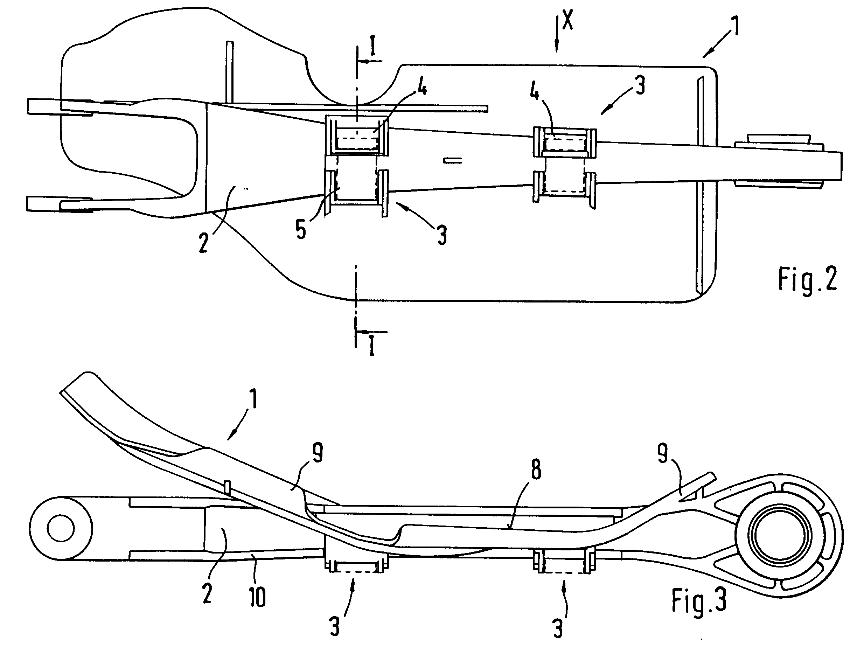

Wie Fig. 2 näher zeigt, sind vorzugsweise zwei Einhakverbindungen 3 vorgesehen, die jeweils aus gegenüberstehenden Haltelaschen 4, 5 bestehen und wobei eine der Haltelaschen 4 oder 5 mit einer Schließzunge 6 verbunden ist, die in einer Rastöffnung 7 der anderen Haltelasche 4 oder 5 einhakbar ist.

Der Radlenker 2 ist zum Verbinden mit dem Luftleitelement 1 in einer Aufnahmeöffnung 8 des Elements gelegen und stützt sich endseitig der Öffnung 8 an verbleibenden Flächen 9 des Elements 1 ab.

Der Radlenker 2 weist Rippen 10 auf, die von den winkelförmig gestalteten Haltelaschen 4, 5 von einer Seite umgriffen werden. An der Rückseite der Rippen 10 erstrecken sich an das Luftleitelement angeformte Stützplatten 11, die in Aufnahmen des Radlenkers 2 eingreifen und eine Axialsicherung des Luftleitelements 1 auf dem Radlenker 2 bewirken.

Die Schließzunge ist über ein Filmgelenk 12 elastisch schwenkbar und weist endseitig einen Haken 13 auf, der in die Öffnung 7 einhakbar ist. Dieser ist zu diesem Zweck mit einem zu hintergreifenden Keil 14 ausgeführt.

Zum Verbinden des elastischen Luftleitelements 1 mit dem Radlenker 2 wird das Element 1 um seine Längsachse soweit aufgebogen, bis der Radlenker 2 zwischen den Haltelaschen 4, 5 durchgeführt und in die Aufnahmeöffnung 8 einlegbar ist. Danach nimmt das Element 1 wieder eine Ausgangslage ein, in der Weise, daß die Haltelaschen 4, 5 den Radlenker 2 von außen fest umgreifen, so daß die Schließzunge 6 mit dem Haken 13 in die Einrastöffnung 7 einhakbar ist. Dieses Einhaken erfolgt quasi in dem Augenblick, wenn das Luftleitelement 1 die Ausgangslage wieder einnimmt. Durch ein Aufbiegen des Luftleitelements 1 ist ein Enthaken und somit ein Ersetzen des Luftleitelements 1 bei einem Defekt möglich.

## Patentansprüche

1. Kraftfahrzeug mit einer Luftleitvorrichtung zum Kühlen von Radbremsen mit einem entgegen dem ankommenden Luftstrom angestellten profilierten Umlenkelement, das fahrzeugseitig an einem Achsbauteil, wie einem Radlenker gehalten ist, dadurch gekennzeichnet, daß das Luftleitelement (1) über mindestens eine angeformte Einhakverbindung (3) am Radlenker (2) befestigbar ist.

2. Kraftfahrzeug nach Anspruch 1, dadurch gekennzeichnet, daß die Einhakverbindung (3) zwei den Radlenker (2) umgreifende und gegenüberstehende Haltelaschen (4, 5) mit einem in eine Haltelasche (4 oder 5) einrastbaren Schließzunge (6) umfaßt.

3. Kraftfahrzeug nach Anspruch 2, dadurch gekennzeichnet, daß das Luftleitelement (1) eine längsverlaufende Aufnahmeöffnung (8) aufweist, an die sich Abstützflächen (9) für den Radlenker (2) zu beiden Seiten anschließen und die Haltelaschen (4, 5) der Einhakverbindung (3) jeweils randseitig der Aufnahmeöffnung (8) angeformt sind.

4. Kraftfahrzeug nach den Ansprüchen 2 oder 3, dadurch gekennzeichnet, daß die Haltelaschen (4, 5) winkelförmig ausgebildet sind und Flächen des Radlenkers (2) umgreifen und eine Haltelasche (4 oder 5) eine Einrastöffnung (7) für die Schließzunge (6) aufweist, welche die beiden Haltelaschen (4, 5) miteinander verbindet.

5. Kraftfahrzeug nach Anspruch 4, dadurch gekennzeichnet, daß die Schließzunge (6) von innen her in die Einrastöffnung (7) einhakbar ist.

6. Kraftfahrzeug nach den Ansprüchen 2 bis 5, dadurch gekennzeichnet, daß die Schließzunge (6) zum Verschwenken ein Filmgelenk (12) aufweist und zum Einrasten in die Öffnung (7) einen endseitigen Haken (13) besitzt, der einen Keil (14) in der Öffnung (7) einer der Haltelaschen (4, 5) übergreift.

7. Kraftfahrzeug nach den Ansprüchen 2 bis 6, dadurch gekennzeichnet, daß zwischen den beiden Haltelaschen (4, 5) mindestens eine Stützplatte (11) an mindestens einem Rand der Öffnung (8) angeformt ist, die in eine Aufnahme des Radlenkers (2) zur Axialsicherung eingreift.

8. Kraftfahrzeug nach einem oder mehreren der vorhergehenden Ansprüche, dadurch gekennzeichnet, daß zum Festsetzen des Luftleitelements (1) am Radlenker (2) das Element (1) mit den Haltelaschen (4, 5) derart elastisch aufbiegbar ausgebildet ist, daß der Radlenker (2) in die Aufnahmeöffnung (8) einsetzbar und danach in seine Ausgangsposition zum Verbinden über die Einhakverbindung (3) rückfederbar ist.

## Claims

1. A motor vehicle with a spoiler device for cooling wheel brakes with a profiled deflecting member set contrary to the oncoming air flow and held at the side of the vehicle on an axle part, such as a wheel control arm, **characterized in that** the spoiler member (1) can be secured to the wheel control arm (2) by way of at least one integrally moulded hook connexion (3).

2. A motor vehicle according to Claim 1, **characterized in that** the hook connexion (3) comprises two opposed holding plates (4, 5) engaging around the wheel control arm (2) and having a closure tongue (6) engageable in one holding plate (4 or 5).

3. A motor vehicle according to Claim 2, **characterized in that** the spoiler member (1) comprises a longitudinally extending receiving opening (8) to which support faces (9) for the wheel control arms (2) are attached on both sides, and the holding plates (4, 5) of the hook connexion (3) are each formed integrally on the edge of the receiving opening (8).

4. A motor vehicle according to Claim 2 or 3, **characterized in that** the holding plates (4, 5) are angled and engage faces of the wheel control arm (2), and one holding plate (4 or 5) has a catch opening (7) for the closure tongue (6) connecting the two holding plates (4, 5) together.

5. A motor vehicle according to Claim 4, **characterized in that** the closure tongue (6) can be hooked into the catch opening (7) from the inside.

6. A motor vehicle according to Claims 2 to 5, **characterized in that** the closure tongue (6) has a film hinge (12) for pivoting and, in order to engage in the opening (7), the closure tongue (6) is provided at the end thereof with a hook (13) engaging over a wedge (14) in the opening (7) in one of the holding plates (4, 5).

7. A motor vehicle according to Claims 2 to 6, **characterized in that** between the two holding plates (4, 5) at least one support plate (11) is integrally moulded on at least one edge of the opening (8) and engages in a receiving means of the wheel control arm (2) for securing the support plate (11) axially.

8. A motor vehicle according to one or more of the preceding Claims, **characterized in** **that**, in order to secure the spoiler member (1) on the wheel control arm (2), the member (1) with the holding plates (4, 5) is made resiliently flexible in such a way that the wheel control arm (2) can be inserted in the receiving opening (8) and can then be sprung back into its starting position for connecting by way of the hook connexion (3).

## Revendications

1. Véhicule automobile comportant un dispositif de guidage d'air pour le refroidissement de freins de roue présentant un élément déflecteur profilé, qui est placé à la rencontre du courant d'air arrivant, et qui est maintenu, côté véhicule, sur un composant d'essieu tel qu'un bras de roue, caractérisé en ce que l'élément de guidage d'air (1) peut être fixé sur le bras de roue (2), par au moins un assemblage à accrochage (3) venu de moulage.

2. Véhicule automobile selon la revendication 1, caractérisé en ce que l'assemblage à accrochage (3) comprend deux pattes (4, 5) de retenue entourant le bras de roue et se faisant face, avec une languette de fermeture (6) pouvant s'accrocher dans une patte de retenue (4 ou 5).

3. Véhicule automobile selon la revendication 2, caractérisé en ce que l'élément de guidage d'air (1) présente une ouverture formant logement (8) qui étend longitudinalement et à laquelle font suite, des deux côtés, des surfaces d'appui (9) pour le bras de roue (2) et en ce que les pattes de retenue (4, 5) de l'assemblage à accrochage (3) sont formées chacune sur un bord de l'ouverture formant logement (8).

4. Véhicule automobile selon la revendication 2 ou 3, caractérisé en ce que les pattes de retenue (4, 5) sont angulaires et entourent des surfaces du bras de roue (2) et en ce qu'une patte de retenue (4 ou 5) présente une ouverture d'accrochage (7) pour la languette de fermeture (6), laquelle relie entre elles les deux pattes de retenue (4, 5).

5. Véhicule automobile selon la revendication 4, caractérisé en ce que la languette de fermeture (6) peut s'accrocher dans l'ouverture d'accrochage (7), à partir de l'intérieur.

6. Véhicule automobile selon les revendications 2 à 5, caractérisé en ce que la languette de fermeture (6) présente une articulation à paroi mince (12) pour son pivotement et possède un crochet terminal (13) pour l'accrochage dans l'ouverture (7), lequel crochet se place à cheval sur un coin (14) dans l'ouverture (7) de l'une des pattes de retenue (4, 5).

7. Véhicule automobile selon les revendications 2 à 6, caractérisé en ce qu'entre les deux pattes de retenue (4, 5) est formée, sur au moins un bord de l'ouverture (8), au moins une plaque d'appui (11) qui s'engage dans un logement du bras de roue (2) en vue d'un blocage axial.

8. Véhicule automobile selon une ou plusieurs des revendications précédentes, caractérisé en ce que pour fixer l'élément de guidage d'air (1) sur le bras de roue (2), l'élément (1) avec ses pattes de retenue (4, 5) est réalisé pour pouvoir être ouvert élastiquement de manière que le bras de roue (2) puisse être inséré dans l'ouverture formant logement (8), et il peut ensuite reprendre par effet de ressort son état initial, en vue de l'assemblage par accrochage (3).
